# EUROPEAN PATENT APPLICATION

(11) **EP 4 810 443 A1**
(43) Date of publication of application: **23.09.2026**
(21) Application number: 25164794.7
(22) Date of filing: 19.03.2025
(51) Int. Cl.: C01D 9/00, C01F 11/36, C09K 5/06

(54) **METHOD TO PRODUCE A TERNARY MOLTEN SALT MIXTURE CONTAINING CALCIUM NITRATE AND POTASSIUM NITRATE**

(71) Applicant: Yara International ASA, 0277 Oslo (NO)
(72) Inventor: Chladek, Petr, 0277 Oslo (NO)
(74) Representative: De Clercq & Partners

(57) **Abstract**

The present disclosure relates to method to remove water during production of a ternary molten salt mixture, comprising at least calcium nitrate and potassium nitrate where the calcium nitrate in the form of a hydrated calcium nitrate or a hydrated calcium nitrate / potassium nitrate double salt. Foaming can be reduced by controlling the interaction between water evolving from the calcium nitrate and the potassium nitrate, more particularly to impurities present in the potassium nitrate.

## Description

### Technical field

The present disclosure relates to the field of ternary molten salts and more particularly ternary molten salts containing calcium nitrate and potassium nitrate as a double salt.

### Background

Renewable energy resources have become crucial for sustainable development due to the worsening global energy crisis and the steady rise in greenhouse gas emissions.

Nitrate molten salts are extensively used as a Thermal Energy Storage (TES) medium for sensible heat storage in amongst others TES systems. Nitrate molten salts may be phase change materials (PCMs) which store or release heat when they undergo a phase change, i.e. from solid to liquid, or from liquid to solid. Therefore, nitrate salts can be used as an effective way of storing thermal energy from energy sources such as amongst others solar and wind energy, off-peak electricity, and industrial waste heat. Nitrate molten salts are the most promising materials for latent heat storage (LHS) applications. Latent heat is the amount of heat added to or removed from a substance to produce a change in phase. Molten salts may also be used as Sensible Heat Storage (SHS) medium to retain thermal energy without a phase change. In an SHS system, the molten salts are kept in a liquid form in a "cold" storage tank. The liquid salt is then pumped through panels in a solar collector where the focused sun heats the molten salt and sends it to a hot storage tank. With proper insulation of the tank, the thermal energy can be usefully stored for up to a week. When electricity is needed, the hot molten salt is then pumped to a conventional steam-generator to produce superheated steam for driving a conventional turbine/generator set.

Molten salts can be used as heat transfer media. Molten salts are commonly known as a mixture of two (binary molten salts), three (ternary molten salts) or even four (quaternary molten salts) salts. Molten salts are the most used materials for thermal energy storage at high temperatures. This is due to several physical properties that they exhibit, which are important in industrial applications related to energy, such as high volumetric heat capacity, high boiling point, high temperature stability, and their vapor pressure being close to zero. The first factor affecting the performance of a TES system is the thermal stability of the salts that are used to store heat, i.e., the temperature interval in which they are in a liquid form. The thermal stability of nitrate molten salts (MNO₃, M = alkali metal), allows the heat to be stored between ≈ 246°C and ≈ 616°C. This interval is typical for pure alkali nitrates (LiNO₃, NaNO₃, KNO₃), while their mixtures show a lower freezing point (for instance for the eutectic NaNO₃-KNO₃ mixture this is ≈ 222°C).

In comparison with binary salt mixtures, ternary and quaternary salt mixtures have demonstrated the ability to attain a lower melting temperature than binary salt mixtures.

Currently, there are several commercially known ternary nitrate salts mixtures that are used as heat storage media. Examples are amongst others the following:
- Coastal Chemical developed a ternary mixture of 53 wt.% of KNO₃, 40 wt.% of NaNO₂, and 7 wt.% of NaNO₃, this salt having a melting point of 142°C,
- a ternary mixture of 48 wt.% Ca(NO₃)₂, 45 wt.% KNO₃ and 7 wt.% NaNO₃ with a melting point of 133°C, and
- a Solar Power Molten Salt as developed by the applicant comprising 42 wt.% Ca(NO₃)₂, 43 wt.% KNO₃ and 15 wt.% NaNO₃, with a low melting temperature of about 131°C.

Other ternary salt mixtures use lithium nitrate (LiNO₃) in order to reduce the melting point and increase the heat capacity of the molten salts used in thermal energy storage. Examples thereof are described in amongst others
- Fernández et al., Development of new molten salts with LiNO3 and Ca(NO3)2 for energy storage in CSP plants, Applied Energy 119 (2014) 131 - 140, proposed ternary mixtures of 52 wt.% KNO₃ , 28 wt.% NaNO₃, and 20 wt.% LiNO₃ with a melting point of 130.15 °C,
- Bradshaw and Meeker, High-temperature stability of ternary nitrate molten salts for solar thermal energy systems, Solar Energy Materials Volume 21, Issue 1 (November 1990) 51 - 60, reported the eutectic 53 wt.% KNO₃ , 18 wt.% NaNO₃ , and 30 wt.% LiNO₃, with a melting temperature about 120 °C, and
- Y. Krishna et al, State-of-the-art heat transfer fluids for parabolic trough collector, International Journal of Heat and Mass Transfer, Volume 152 (May 2020) 119541, discloses 43 wt.% Ca(NO₃)₂, 45 wt.% KNO₃ and 12 wt.% LiNO₃.

This disclosure relates to liquid ternary nitrate and nitrite / nitrate molten salt mixtures containing at least calcium nitrate and potassium nitrate, and additionally another third alkali metal nitrate or nitrite salt. The big hurdle with these salts is the presence of the crystalline water in the salt structure thereof giving difficulties to obtain an acceptably low amount of water when the salts are molten until a liquid molten salt mixture is obtained.

### Summary

According to a first aspect of the present disclosure, a method is disclosed to produce a ternary molten salt mixture, the mixture comprising calcium nitrate, potassium nitrate and a third alkali metal nitrate or nitrite salt, the method comprising: providing calcium nitrate in the form of hydrated calcium nitrate, a liquid calcium nitrate solution or a calcium nitrate / potassium nitrate double salt, and heating the calcium nitrate to a target temperature that provides a water content of 2 wt.% or less; wherein the third alkali metal nitrate or nitrite salt is mixed with the calcium nitrate before, during or after the heating step; and wherein potassium nitrate is mixed with the calcium nitrate before, during or after the heating step; and wherein, if the potassium nitrate is mixed with the calcium nitrate before the calcium nitrate reaches the target temperature, then the potassium nitrate has a purity of at least 99.3 wt.%.

In more specific embodiments, the third alkali metal nitrate or nitrite salt is lithium nitrate (LiNO₃), sodium nitrate (NaNO₃), sodium nitrite (NaNO₂), or potassium nitrite (KNO₂).

In particular embodiments, the ternary molten salt comprises Ca(NO₃)₂, NaNO₃ and KNO₃ in a weight ratio of (30 - 50) : (5 to 20) : (30 - 50), provided the sum of the weight of Ca(NO₃)₂, NaNO₃ and KNO₃ is 100 wt.%. In even more particular embodiments, Ca(NO₃)₂, NaNO₃ and KNO₃ are in a weight ratio of about 42 : 15 : 43.

In more specific embodiments the calcium nitrate is in the form of a calcium nitrate / potassium nitrate double salt which is then mixed with additional potassium nitrate to get at the appropriate weight ratio of potassium nitrate in the ternary molten salt. More specific embodiments of the calcium nitrate / potassium nitrate double salt include the general formula KNO₃.5Ca(NO₃)₂.10H₂O, where the double salt has an average chemical composition of about 9 wt.% KNO₃, about 74 wt.% of Ca(NO₃)₂ and about 16 wt.% of water (H₂O).

Without being bound by theory, foaming of the molten salt when drying is thought to be due to impurities in the potassium nitrate interacting with water evolving from the calcium nitrate, either from solution or from the hydrate. Foaming can therefore be reduced when using potassium nitrate with a purity of at least 99.3 wt.%, at least 99.5 wt.%, or at least 99.8 wt.% or about 99.8 wt.%. Alternatively, or in addition to using relatively high purity potassium nitrate, the potassium nitrate salt can be mixed with the calcium nitrate once the calcium nitrate, either alone or in a mixture with the third alkali metal nitrate or nitrite salt has been heated to a target temperature with a water content of 2 wt.% or less. In more specific embodiments, the target temperature is at least 220 °C, for example between 220 °C and 560 °C, or between 220 °C and 310 °C, or between 250 °C and 290 °C.

In some embodiments, the mixture is subjected to a second heating step after all of the salts have been mixed together to a final temperature where the mixture has less than 1 wt.% water, or less than 0.5 wt.% water and even more particularly less than 0.1 wt.% water. For example, the final temperature may be from 300 °C to 350 °C.

Advantageously, by reducing the foaming, it is practicable to heat the mixture relatively quickly, for example, at a rate of 10 - 25 °C/min. This reduces the overall time needed to prepare the molten salt mixture for use.

In another aspect of the present disclosure, a use is disclosed of a potassium nitrate with at least a 99.3 wt.% purity in a molten salt. In more specific embodiments, the molten salt further comprises calcium nitrate and in even more specific embodiments, the molten salt is a ternary molten salt such as, for example a calcium nitrate, sodium nitrate and potassium nitrate molten salt. In even more particular embodiments the ternary molten salt comprises Ca(NO₃)₂, NaNO₃ and KNO₃ in weight ratios of about 42 : 15 : 43.

### Description of Figures

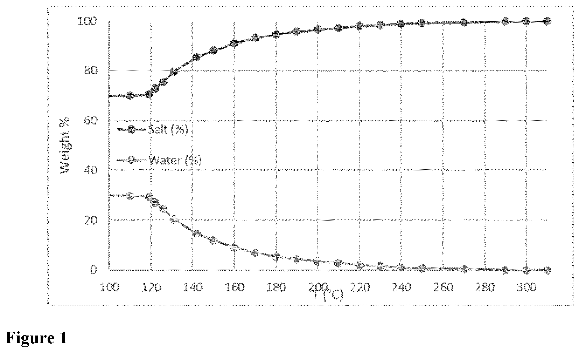

Figure 1 is an evaporation curve of a ternary salt of Ca(NO₃)₂, NaNO₃ and KNO₃ in weight ratios of about 42 : 15 : 43 as prepared in Example 2.

### Detailed description

Ca(NO₃)₂ in its anhydrous form is a hygroscopic solid, forming the liquid tetrahydrate salt Ca(NO₃)₂.4H₂O with a melting point of about 43°C. In its particulate form, it is difficult to handle. As reported, water was removed from a molten salt using Ca(NO₃)₂.4H2O by mixing with anhydrous NaNO₃ and KNO₃, heating to 120 °C for 12 hours and then heating to 300 °C for an additional 12 hours (see Judith C. Gomez, Nicolas Calvet, Anne K. Starace and Greg. C. Glatzmeier "Ca(NO3)2-NaNO3-KNO3 Molten Salt Mixtures for Direct Thermal Energy Storage Systems in Parabolic Trough Plants" Journal of Solar Energy 2013 (135) 021016-1 to 021016-8 at 021016-3) which document is enclosed herein by reference. Calcium nitrate is also available as a liquid solution (for example 50 wt.% calcium nitrate solution). Calcium nitrate solutions are relatively easy to handle but include a relatively large amount of water that would need to be removed before the mixture could be used as a molten salt which requires both a longer time and more energy.

Advantageously, calcium nitrate can be used in a molten salt as the double salt of Ca(NO₃)₂ and KNO₃ as discussed in more detail in EP2898039 (Yara 2016) (hereinafter referred to as EP'039), which document is enclosed herein by reference. EP'039 relates to the use of a calcium potassium nitrate salt for the manufacture of a melt, in particular a nitrate-based heat transfer fluid (HTF) and/or thermal energy storage fluid, for example in solar energy applications, such as in solar electrical power plant systems using a parabolic through, a central receiver or a linear Fresnel, which have both a low melting temperature and a high decomposition temperature, as well as to a method for the manufacture thereof. The calcium nitrate / potassium nitrate double salt as described therein is a particulate product from a melt comprising 1.5 to 5.5 wt.% of K (present as KNO₃), 70 to 80 wt.% of Ca(NO₃)₂ and 13 to 18 wt.% of water, the melt more in particular comprising between 2.5 to 4 wt.% of K (present as KON₃), 74 to 75 wt.% of Ca(NO₃)₂ and 15 to 16 wt.% of water. More specifically, the double salt is a product marketed under the tradename NitCal/K by Yara International, Oslo. NitCal/K is a calcium nitrate / potassium nitrate double salt with the general formula KNO₃.5Ca(NO₃)₂.10H₂O and having an average chemical composition of about 9 wt.% of KNO₃ (about 3.5 wt.% of K), about 74 wt.% of Ca(NO₃)₂ and about 16 wt.% of water. It is furthermore ammonium-free. The melt comprises at least NaNO₃, KNO₃ and Ca(NO₃)₂, and more in particular Ca(NO₃)₂, NaNO₃ and KNO₃ in a weight ratio of (30 to 50) : (10 to 20) : (30 to 50), provided the sum of the weight of Ca(NO₃)₂, NaNO₃ and KNO₃ is 100 wt.%, and most in particular in a weight ratio of about 42 : 15 : 43.

It can be manufactured as a free-flowing solid particulate product with a low water absorption and caking tendency.

The calcium nitrate / potassium nitrate double salt may be produced according to a method disclosed in US Patent 6,610,267 (Norsk Hydro 2003) (hereinafter referred to as US'267), which document is enclosed herein by reference. US'267 relates to a method for manufacturing a homogeneous and ammonium free calcium nitrate melt with high solidification temperature suitable for conventional particulation methods, and products of such a melt. More in particular, the method as disclosed in US'267 relates to the production of a melt by mixing a potassium source with a calcium nitrate source and heating the mixture to a temperature of between 150 °C to 155 °C to form a homogeneous and ammonium free melt comprising 1.5 - 5.5 % by weight of K (as KNO₃), 13 - 18 % by weight of water, and 70 - 80 % by weight of Ca(NO₃)₂., and more in particular 2.5 - 4.0 % by weight of K (as KNO₃), 15 - 16 % by weight of water, and 74 - 75 % by weight of Ca(NO₃)₂. A solid KNO₃ or a KNO₃ solution is applied as a potassium source. Alternatively, a potassium hydroxide (KOH) neutralised with nitric acid is applied as a potassium source. An aqueous Ca(NO₃)₂-solution or melt is applied as a calcium nitrate source. Prior to conventional particulation, the water content in the melt is adjusted by evaporation. Further, it was found that undercooling was avoided and that particulation with conventional methods (such as prilling and granulation) was possible when the melt has a certain concentration ratio of K, Ca(NO₃)₂ and water, in particular, comprising 1.5 to 5.5 wt.% of K (present as KNO₃), 70 to 80 wt.% of Ca(NO₃)₂ and 13 to 18 wt.% of water.

Unfortunately, it has been observed that when making a ternary molten salt from a hydrated calcium nitrate, the molten salt may foam significantly when first mixed and heated to remove the crystal hydrates.

Without being bound by theory, the foaming itself is primarily due to impurities found in potassium nitrate. Even use of 99.0 % pure potassium nitrate leads to major foaming issues. 99.0 % pure potassium nitrate means that 99.0% of the component is potassium nitrate, and the remaining 1 % consists of impurities. Increasing the purity to 99.3 % has been seen to significantly decrease the level of foaming and no foaming was seen with 99.8 % pure potassium nitrate. As such, the purity of the potassium nitrate should be at least 99.3 %, at least 99.5 %, at least 99.7 %, at least 99.8 % or alternatively from 99.3 to 100 % pure, or from 99.3 % to 99.9 % pure, or from 99.3 % to 99.8 % pure, or from 99.5-100wt.% pure, or from 99.5 % to 99.9wt.% pure, or from 99.5 % to 99.8 % pure, or from 99.7 % to 100 % pure, or from 99.7 % to 99.9 % pure, or from 99.7 % to 99.8 % pure, or from 99.8 % to 100 % pure, or from 99.8 % to 99.9 % pure or about 99.8 % pure.

When higher purity potassium nitrate is used in a mixture with the calcium nitrate / potassium nitrate double salt and a third alkali metal nitrate or nitrite, then foaming is reduced regardless of how the ternary melt is prepared. For example, all three salts can be mixed, followed by controlled heating, i.e. heating up the solid mixture using a specific temperature program and/or temperature gradient. Alternatively, one or two of the salts can be mixed and melted before adding the other components to the melt.

It is generally considered easier to handle if all of the different salts are initially mixed together, including at least the calcium nitrate / potassium nitrate double salt, additional potassium nitrate and a third alkali metal nitrate or nitrite salt. NaNO₃ as the third alkali metal nitrate salt has not been seen to contribute to any foaming. If the third alkali metal nitrate or nitrite salt contains significant amounts of water, it may contribute to foam generation in the presence of impurities from the potassium nitrate. In more specific embodiments, the third alkali metal nitrate or nitrite salt is anhydrous. In such anhydrous form, the third alkali metal nitrate or nitrite salt would not be expected to have any effect on foaming issues. The third alkali metal nitrate or nitrite salt may be, for example, lithium nitrate, sodium nitrate, sodium nitrite, or potassium nitrite. In more specific embodiments, the third alkali metal nitrate or nitrite salt is sodium nitrate.

In more specific embodiments, the ternary molten salt comprises Ca(NO₃)₂, NaNO₃ and KNO₃ in a weight ratio of (30 - 50) : (5 - 20) : (30 - 50), provided the sum of the weight of Ca(NO₃)₂, NaNO₃ and KNO₃ is 100 weight %. Gomez et al., Journal of Solar Energy Engineering 2013 (135) (as discussed above), describes testing of several ternary molten salts of Ca(NO₃)₂, NaNO₃ and KNO₃ in several ratios including 48 : 7 : 45; or 78 : 11 : 44; or 44 : 12 : 44; or 42 : 15 : 43; or 36 : 16 : 48; or 30 : 24 : 46. Even more specifically, the Ca(NO₃)₂, NaNO₃ and KNO₃ are present in the melt in a weight ratio of about 42 : 15 : 43, provided the sum of the weight of Ca(NO₃)₂, NaNO₃ and KNO₃ is 100 weight %. The latter ratio is about the eutectic point of the ternary composition and offers the lowest melting point, i.e. about 131 °C. Hence, it is advantageous to mix the three components in a solid form and melt the resulting particulate mixture, as less energy will be required.

With the more specific composition of the Ca(NO₃)₂, NaNO₃ and KNO₃ salts present in the melt in a weight ratio of about 42 : 15 : 43, a decomposition temperature of 536 °C is seen. When the NitCal/K from Yara as a calcium nitrate / potassium nitrate double salt is used, then the resulting melt can reach a decomposition temperature of 569 °C such that an upper operating temperature of the melt of 550 to 560 °C is achievable. The higher decomposition temperature may be due to a higher purity source of calcium nitrate / potassium nitrate from the double salt.

Without being bound by theory, foaming also appears to be affected by evolution of water from the calcium nitrate / potassium nitrate double salt while heating. Foaming can therefore be reduced by first providing the double salt and then heating it to a target temperature where most of the water has been removed. The additional potassium nitrate needed to balance the ratio of calcium nitrate, potassium nitrate and third alkali metal nitrate or nitrite can then be added to the mixture. With most of the water having been removed from the double salt, less foaming is observed upon addition of the potassium nitrate. In some embodiments, the target temperature provides a water content of 2 wt.% or less in the salt mixture, more specifically 1 wt.% or less, 0.5 wt.% or less, or 0.1 wt.% or less. Reduced foaming is expected with reduced amounts of water present in the molten salt prior to addition of the potassium nitrate salt.

As mentioned above, the third alkali metal nitrate or nitrite salt can be added to the solid double salt before, during or after the heating step.

In embodiments where the mixture is prepared from solid salts including the calcium nitrate / potassium nitrate double salt, the initial water content would be 8.7 wt.% and boiling would start at 160 °C. This is seen from Figure 1 and Example 2 as discussed below. For the molten salt of the formula Ca(NO₃)₂, NaNO₃ and KNO₃ in a weight ratio of about 42 : 15 : 43, 2 wt.% water is achieved at a temperature at about 220 °C. The target temperature would therefore be at least 220 °C, more particularly at least 240 °C, or at least 250 °C, or at least 270 °C, or at least 290 °C, or at least 300 °C. In other embodiments, the target temperature is from 220 to 560 °C, or from 220 to 310 °C , or from 220 to 290 °C, or from 220 to 270 °C, or from 220 to 250 °C, or from 240 to 250 °C, or from 240 to 270 °C, or from 240 to 290 °C, or from 240 to 310 °C.

For practical purposes, water needs to be removed from the molten salt before use. However, some residual water is acceptable. For example, a molten salt with 2 wt.% water content could be used as a Thermal Energy Storage medium when steam can be vented during operation. A second heating step can advantageously be used to further reduce the water content to below 1 wt.%, or below 0.5 wt.% or below 0.1 wt.%. From figure 1 and Example 2 as discussed below, the identified molten salt would have 1 wt.% water at about 240 °C, or 0.5 wt.% water at about 270°C, or 0.1 wt.% water at about 300 °C.

In US patent application 2012/0216981 (hereinafter referred to as US'981), which document is hereby incorporated by reference, drying of thermal salts was described as being done by exposing the material to a desiccant or heating in an inert or relatively dry atmosphere (e.g. having a relative humidity less than 20 %, preferably less than 10 %, and most preferably less than 1 %). Once dried, the material would then be stored in a relatively dry environment (e.g. in a desiccant container, in a glove box in a dry atmosphere, in a hermetically sealed container, under vacuum and the like) such that the water concentration is maintained at a relatively low concentration (see paragraph [0072] of US'981). Contrary to this teaching, heating itself does not need to be in an inert or dry atmosphere in order to remove water. However, if it is desired to store the product for a period of time in a solid form (e.g. as pastilles), before use as a TES, then the pastilles or other solid product should be made and cooled in a controlled atmosphere and immediately bagged.

In some embodiments, the third alkali metal nitrate or nitrite salt may first be heated and the double salt mixed into the melt. In such embodiments, the heat from the third alkali metal nitrate or nitrite salt heats the double salt thereby removing water from the double salt. In some embodiments, additional heating may be necessary to bring the double salt to the target temperature before additional potassium nitrate can be added to the melt. However, this will depend on the temperature of the third alkali metal nitrate or nitrite salt prior to mixing with the double salt and if there is any decrease in temperature seen upon mixing.

A ternary molten salt mixture according to the present disclosure is produced by a method according to the present disclosure as described above. This ternary molten salt mixture has a water content of between 0 wt.% and 1.0 wt.%.

The term "about", when used herein, is a relative term depending on the particular property being measured. For example, about 150 °C means plus or minus 10 °C. In comparison, a chemical composition of about 9 wt.% KNO₃, about 74 wt.% of Ca(NO₃)₂) and about 16 wt.% of water means plus or minus 1 wt.%; a water content of about 2 wt.%, or about 1 wt.%, or about 0.5 wt.% means plus or minus 0.1 wt.% but a water content of about 0.1 wt.% means plus or minus 0.05 wt.%; a weight ratio of, for example, about 42 : 15 : 43 means plus or minus 2 for any one component in the weight ratio but that the total must still add up to 100 wt.%; and a purity of about 99.8 % pure means plus or minus 0.1 %.

The invention will now be illustrated by way of examples. The examples should not be construed as limiting the scope of the invention, which is defined in the appended claims.

### Examples

Material:
- double salt Nitcal/K (Yara Porsgrunn, Porsgrunn) 75.4 wt.% Ca(NO₃)₂, 7.77 wt.% KNO₃, 16.2 wt.% H₂O, 0.6 wt.% NH₃NO₃;
- NaNO₃, 98+ % Alfa Aesar or BASF HQ non-food grade;
- KNO₃, 99 % Alfa Aesar, SQM 99.3 % technical grade (prilled), or SQM 99.8 % refined grade (prilled).

### Example 1

The samples were prepared in a tall 1 liter beaker (d = 10 cm, h = 17.5cm) to accommodate foam development during salt addition and boiling of the water. The total amount of each batch was 200 g. The order of the salts was varied but in each experiment identical ternary molten salts of Ca(NO₃)₂, NaNO₃ and KNO₃ were produced in weight ratios of about 42 : 15 : 43. The heating rate was set at maximum (10 °C / min) unless otherwise noted. During melting and upon addition of salt components to the melt, the resulting melt was stirred with a glass rod. Foam onset time and temperature and development was recorded. Size of bubbles diminished with decreasing water content. Once bubble evolution stopped, the salt mixture was considered dry and the resulting melt was poured into a silicon form and left to solidify.

### Experiments 1a and 1b

In experiments 1a and 1b, the double salt Nitcal/K was melted first and then the NaNO₃ and KNO₃ were added to the melt early in the process, before evaporation of the water could begin. In experiment 1a, KNO₃ was added before NaNO₃ and this order was reversed in experiment 1b. In both experiments, large amounts of foam evolved starting at 150 °C and heating had to be reduced to maintain the temperature of the melt at 200 °C while water evaporated.

### Experiment 1c

In experiment 1c, KNO₃ was melted first and the double salt Nitcal/K was added to the hot melt at 253 °C, which resulted in a violent boil-off, temperature drop and formation of foam, the formation of which was suppressed by the addition of NaNO₃ at 157 °C. In general, the salt was difficult to melt due to the violent boil-off with the calcium nitrate.

### Experiment 1d

In experiment 1d, NaNO₃ was melted first and the double salt Nitcal/K was added at 210 °C. The addition did not lead to violent boiling and no foam was generated. KNO₃ was then added to a water-free melt at 300 °C. The addition of KNO₃ led to a temperature drop and formation of some foam at 255 °C.

### Experiment 1e

In experiment 1e, the double salt Nitcal/K was first melted and boiled to dryness at 250 °C. NaNO₃ and KNO₃ were then added leading to an intermediate amount of foaming. The slurry was initially relatively difficult to stir but this became easier over time.

### Experiment 1f

In experiment 1f, all three salts, Nitcal/K, NaNO₃ and KNO₃ were pre-mixed and heated at 10 °C/min. Significant amounts of foam evolved. This experiment was similar to experiment 1a except that the double salt Nitcal/K was not melted before addition of the other two salts.

### Experiment 1g

In experiment 1g, the double salt Nitcal/K was mixed with NaNO₃ and then heated to produce a water free melt at 290 °C before KNO₃ was added. The temperature dropped upon addition of KNO₃ and some foam formation was observed starting at 242 °C. The foam disappeared completely at 308 °C.

### Experiment 1h

Experiment 1h, the double salt Nitcal/K was mixed with KNO₃ and then heated before NaNO₃ was added. Large amounts of foam evolved starting at 160 °C and prior to the addition of NaNO₃.

### Experiment 1i

Experiment 1i, all three salts, the double salt Nitcal/K, NaNO₃ (BASF) and KNO₃ (SQM, 99.3 %) were premixed and heated at a maximum rate of 10 °C/min. Very little foaming was observed.

### Experiment 1j

Experiment 1j, all three salts, the double salt Nitcal/K, NaNO₃ (BASF) and KNO₃ (SQM, 99.8 %) were premixed and heated at a maximum rate of 10 °C/min. No foam was observed.

### Results

**Table 1:**

| Experiment | Temp. at foaming start (°C) | Volume of max foaming (ml) | Time to 300 °C (min) |
|---|---|---|---|
| 1a | 150 | 942 | 54 |
| 1b | 150 | 1257 | 46 |
| 1c | 150 | 1021 | 40 |
| 1d | 255 | 314 | 28 |
| 1e | 200 | 628 | 31 |
| 1f | 160 | 1200 | 30 |
| 1g | 242 | 314 | 31 |
| 1h | 130 | 1335 | 32 |
| 1i | 160 | 430 | 28 |
| 1j | no foam | | 28 |

From these experiments, it can be concluded that foam evolution can be mainly linked to impurities found in KNO₃ (both 99 % Alfa Aesar and 99.3 % SQM) and to a lesser degree to the water being removed from CN. When refined grade KNO₃ from SQM (99.8 %), no foam was observed even at the maximum heating rate used (10 °C/min). Alternatively, very little foam was observed with a relatively gentle heating profile (as seen in experiment 1i) or when KNO₃ was added to the melt after the water from the double salt had already been boiled off (as seen in 1d and 1g).

### Example 2

An evaporation curve was prepared starting with a 30wt.% water solution with a ternary salts of Ca(NO₃)₂, NaNO₃ and KNO₃ in weight ratios of about 42:15:43. Evaporation curve data is shown in Figure 1 in percent weight of either water or the ternary salt.

If the mixture is prepared with the Ca(NO₃)₂ and KNO₃ double salt as the only source of water, the initial water content would be 8.7wt.% and boiling would start at about 160°C. In comparison, a 50% Ca(NO₃)₂ solution in water would contain 29.7wt.% water and boiling would start at 119°C. To achieve a substantially water-free melt with less than 0.1wt.% water, the temperature needs to be increased to at least 300°C. For practical purposes where steam is allowed to vent during operation, 2% H₂O content could work in practice which would be achieved at 220°C.

### Example 3

15g of NaNO₃ and 53g of NitCal/K double salt were added to a melting vessel and mixed to form a mixture. This mixture was heated to a temperature of 270°C at a rate of 20°C/min resulting in a hot melt. Once the hot melt reached 270°C, 40g of KNO₃ was added to the hot melt and stirred. The hot melt was then heated at a rate of 20°C/min to a temperature of 310°C. At 310°C, the ternary salt mixture contained less than 1wt.% water.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method to make a ternary molten salt mixture, the mixture comprising calcium nitrate, potassium nitrate and a third alkali metal nitrate or nitrite salt, the method comprising:
a. providing calcium nitrate as a hydrated calcium nitrate, a liquid calcium nitrate solution or a hydrated calcium nitrate / potassium nitrate double salt
b. heating the calcium nitrate to a target temperature that provides a water content of 2wt.% water or less;
wherein the third alkali metal nitrate or nitrite salt is mixed with the calcium nitrate before, during or after the heating step;
and wherein the potassium nitrate is mixed with the calcium nitrate before, during or after the heating step;
and wherein if the potassium nitrate is mixed with the calcium nitrate before the calcium nitrate salt reaches the target temperature, then the potassium nitrate has a purity of at least 99.3wt.%.

2. The method of claim 1 wherein the third alkali metal nitrate or nitrite salt is lithium nitrate, sodium nitrate, sodium nitrite, or potassium nitrite.

3. The method of claim 2 wherein the third alkali metal nitrate is sodium nitrate.

4. The method of claim 3 wherein the ternary molten salt comprises Ca(NO₃)₂, NaNO₃ and KNO₃ in a weight ratio of (30-50) : (5 to 20) : (30 to 50), provided the sum of the weight of Ca(NO₃)₂, NaNO₃ and KNO₃ is 100%.

5. The method of claim 4 wherein the ternary molten comprises Ca(NO₃)₂, NaNO₃ and KNO₂ in a weight ratio of about 42:15:43.

6. The method of any one of claims 1 to 5 wherein the calcium nitrate is in the form of a hydrated calcium nitrate / potassium nitrate double salt.

7. The method of claim 6 wherein the calcium nitrate / potassium nitrate double salt has the general formula KNO₃.5Ca(NO₃)₂.10H₂O and has an average chemical composition of about 9 wt.% KNO₃, about 74 wt.% of Ca(NO₃)₂) and about 16 wt.% of water.

8. The method of one of claims 1 to 7 wherein the purity of the potassium nitrate is at least 99.3wt.%.

9. The method of claim 8 wherein the purity of the potassium nitrate is at least 99.5wt.%.

10. The method of claim 9 wherein the purity of the potassium nitrate is about 99.8wt.%.

11. The method of one of claims 1 to 10 wherein the target temperature is at least 220°C.

12. The method of claim 11 wherein the target temperature is from 220 to 560°C.

13. The method of claim 12 wherein the target temperature is from 220 to 310°C.

14. The method of claim 13 wherein the target temperature is from 250 to 290°C.

15. The method of one of claims 1 to 14 wherein the calcium nitrate, the potassium nitrate and the third alkali metal nitrate or nitrite salt are mixed together before the heating step.

16. The method of one of claims 1 to 14 wherein the potassium nitrate is mixed with the calcium nitrate after the calcium nitrate has reached the target temperature.

17. The method of claim 16 further comprising a second heating step after all of the three salts calcium nitrate, potassium nitrate and third alkali metal nitrate or nitrite sale have been mixed together, wherein the second heating step is to a final temperature where the mixture has less than 1wt.% of water.

18. The method of claim 17 wherein the mixture has less than 0.1wt.% of water.

19. The method of claim 17 wherein the second heating step is to a temperature of 300 to 350°C.

20. The method of one of claims 1 to 19 wherein the heating step is at a rate of 10-25°C/min.

21. Use of potassium nitrate with a purity of at least 99.3 wt.% in a molten salt mixture.

22. The use of claim 21 wherein the molten salt mixture further comprises calcium nitrate.

23. The use of claim 21 or 22 wherein the molten salt mixture is a ternary molten salt mixture.
